# EUROPEAN PATENT APPLICATION

(11) **EP 4 549 902 A1**
(43) Date of publication of application: **07.05.2025**
(21) Application number: 24210373.7
(22) Date of filing: 01.11.2024
(51) Int. Cl.: G01L 9/00, G01L 13/00, G01L 15/00, G01L 19/00, G01L 21/00, G01L 27/00

(54) **PRESSURE TRANSDUCERS HAVING IMPROVED OPERATING PRESSURE RANGES**

(30) Priority: 03.11.2023 US 202363596034 P; 31.10.2024 US 202418933356
(71) Applicant: Illinois Tool Works Inc., Glenview IL 60025 (US)
(72) Inventor: FONTANA, Chris, Glenview, 60025 (US); MEI, Hai, Glenview, 60025 (US)
(74) Representative: HGF

(57) **Abstract**

Disclosed example pressure transducers include: a pressure housing comprising a first cavity; a fluid input line configured to provide a fluid to the first cavity; a first pressure measurement assembly having a first type and configured to output a first measurement signal based on a pressure of the fluid in the first cavity; a second pressure measurement assembly having a second type and configured to output a second measurement signal based on the pressure of the fluid in the first cavity; and a controller configured to determine the pressure of the fluid in the first cavity based on the first measurement signal when the pressure is within a first range and determine the pressure of the fluid in the first cavity based on the second measurement signal when the pressure is within a second range.

## Description

### RELATED APPLICATIONS

The present application claims the benefit of U.S. Provisional Patent Application Serial No. 63/596,034, filed November 3, 2024, entitled "PRESSURE TRANSDUCERS HAVING IMPROVED OPERATING PRESSURE RANGES." The entirety of U.S. Provisional Patent Application Serial No. 63/596,034 is expressly incorporated herein by reference.

### FIELD OF THE DISCLOSURE

This disclosure is directed generally to pressure transducers and, more particularly, to pressure transducers having improved operating pressure ranges.

### BACKGROUND

Pressure sensors, or pressure transducers, measure the pressure of a fluid input to the sensor compared to a reference pressure. Pressure sensors may be constructed to compare the input pressure to a fixed reference pressure or to a variable reference pressure.

### SUMMARY

Pressure transducers having improved operating pressure ranges are disclosed, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a block diagram of an example process control system including a pressure transducer having a fixed reference pressure, in accordance with aspects of this disclosure.
FIG. 2 is a schematic diagram of an example pressure sensor which may be used to implement the pressure sensor of FIG. 1, in accordance with aspects of this disclosure.
FIG. 3 is a perspective view of the example pressure measurement assembly of FIG. 2.
FIG. 4 is another perspective view of the example pressure measurement assembly of FIG. 2.
FIG. 5 is a flowchart representative of example machine readable instructions which may be executed by the pressure transducer of FIG. 2 to determine a pressure of a fluid.

The figures are not necessarily to scale. Wherever appropriate, similar or identical reference numerals are used to refer to similar or identical components.

### DETAILED DESCRIPTION

For the purpose of promoting an understanding of the principles of the claimed technology and presenting its currently understood, best mode of operation, reference will be now made to the embodiments illustrated in the drawings and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.

Conventional manometers use pressure measurement assemblies which have high accuracy over certain ranges. However, conventional manometers may have insufficient operational ranges and/or may have variable accuracy over subranges of the operational range. Additionally, conventional manometers may be unstable over the life of the sensor.

Disclosed example pressure transducers include multiple pressure measurement assemblies (also referred to as pressure sensors) having different types, to provide an extended range of pressure measurement having a low error and high stability. In some examples, a pressure transducer includes a first pressure measurement assembly of a first type (e.g., a microelectromechanical pressure sensor) and a second pressure measurement assembly of a second type (e.g., a capacitance diaphragm gauge). Control circuitry may be used to select which of the multiple pressure measurement assemblies is used as the pressure measurement. In some examples, the different types of pressure measurement assemblies are selected for the pressure measurement for different ranges of pressure measurements, due to differing error factors present in the different pressure measurement assemblies at different pressures.

In some examples, the ranges in which each of the pressure measurement assemblies provides less than a threshold error partially overlaps, and one of the pressure measurement assemblies may be used to calibrate the other of the pressure measurement assemblies. For example, if one type of pressure measurement assembly is more prone to drift or other instability over time, the other type of pressure measurement assembly may be used to recalibrate the pressure measurement assembly to compensate for the drift or instability.

Disclosed example pressure transducers include: a pressure housing comprising a first cavity; a fluid input line configured to provide a fluid to the first cavity; a first pressure measurement assembly having a first type and configured to output a first measurement signal based on a pressure of the fluid in the first cavity; a second pressure measurement assembly having a second type and configured to output a second measurement signal based on the pressure of the fluid in the first cavity; and a controller configured to determine the pressure of the fluid in the first cavity based on the first measurement signal when the pressure is within a first range and determine the pressure of the fluid in the first cavity based on the second measurement signal when the pressure is within a second range.

In some example pressure transducers, the first pressure measurement assembly includes a microelectromechanical pressure sensor. In some example pressure transducers, the microelectromechanical pressure sensor includes a trench etched resonant pressure sensor.

In some example pressure transducers, the second pressure sensor includes a capacitance diaphragm gauge. In some example pressure transducers, the pressure housing includes a second cavity separated from the first cavity by a measurement diaphragm, and the second pressure measurement assembly is positioned within the second cavity. Some example pressure transducers further include a heater configured to heat at least the first and second cavities based on a target temperature. In some example pressure transducers, the first pressure measurement assembly is positioned at least partially within the first cavity or at least partially within the second cavity.

In some example pressure transducers, the first range and the second range cover at least 0.01 Torr to 100 Torr. In some example pressure transducers, the first range and the second range cover at least 0.1 Torr to 1000 Torr. In some example pressure transducers, the first range and the second range cover at least 0.01 Torr to 1000 Torr.

In some example pressure transducers, the controller is configured to calibrate one of the first pressure measurement assembly or the second pressure measurement assembly based on an output of the other of the first pressure measurement assembly or the second pressure measurement assembly when the pressure of the fluid is within a predetermined range. In some example pressure transducers, the first range partially overlaps with the second range, and the predetermined range is at least partially within the overlapping portions of the first range and the second range. In some example pressure transducers, the first range partially overlaps with the second range.

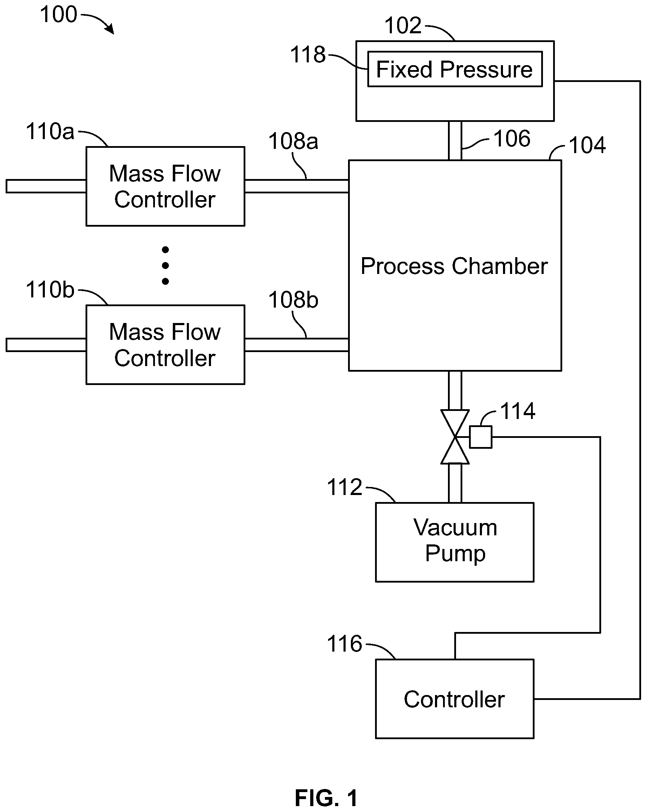

FIG. 1 is a block diagram of an example process control system 100 including a pressure transducer 102. The example process control system 100 of FIG. 1 includes a process chamber 104, to which the pressure transducer 102 is fluidly coupled via a fluid input line 106 to measure the pressure of the process chamber 104.

The example process chamber 104 may receive one or more inputs, such as process feed materials, via a corresponding number of feed lines 108a, 108b, which may be controlled via mass flow controllers 110a, 110b.

The example system 100 may include a vacuum pump 112, or other pressure control pump, and a valve 114 to control a flow rate between the vacuum pump 112 and the process chamber 104. The valve 114 may be controlled by a controller 116, computing device, and/or any other control technique, to maintain the pressure in the process chamber 104 within a desired range. The example pressure transducer 102 is communicatively coupled to the controller 116 to provide pressure feedback to the controller 116 (e.g., for use in a pressure control loop). For example, as the pressure in the process chamber 104 increases, the pressure transducer 102 measures the pressure and provides a signal representative of the pressure to the controller 116, which then controls the valve 114 to increase the flow rate from the process chamber 104 to the vacuum pump 112. The vacuum pump 112 may have an output to any appropriate location based on the nature of the process.

In the example of FIG. 1, the pressure transducer 102 is configured with a fixed pressure 118, to which an input pressure of a fluid received via the fluid input line 106 is compared to output a pressure signal. For example, as discussed in more detail below, the pressure transducer 102 may be provided with a sealable evacuation port which may be sealed when the desired pressure is provided within the pressure transducer 102, and/or the pressure transducer 102 may be assembled and sealed within a volume having the desired reference pressure. The fixed pressure 118 may be a vacuum pressure or another predetermined fixed reference pressure which may be below, at, or above a nominal atmospheric pressure. In the configuration of FIG. 1, the pressure transducer 102 may be used as an absolute pressure sensor.

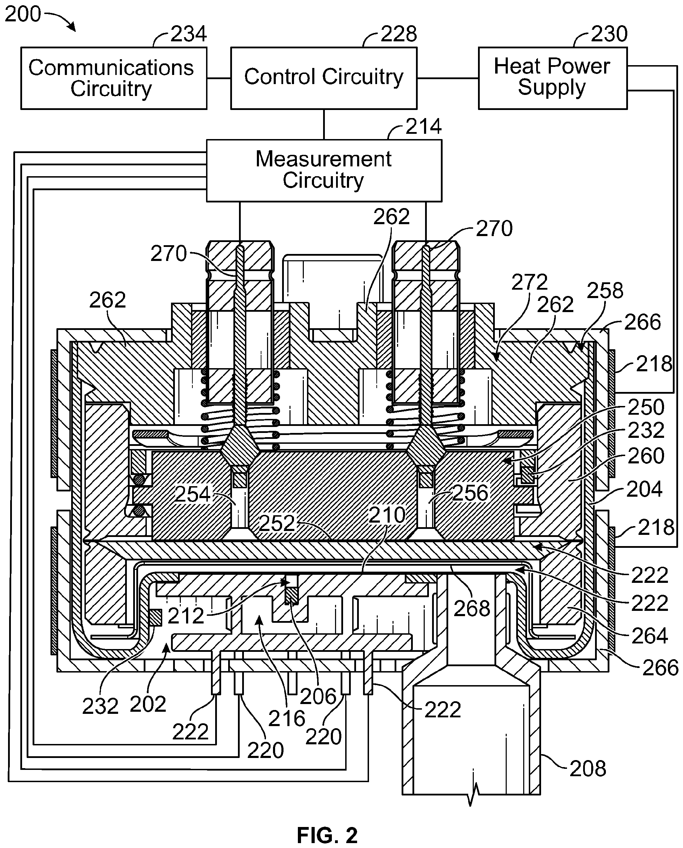

FIG. 2 is a schematic diagram of an example pressure transducer 200 which may be used to implement the pressure transducer 102 of FIG. 1. The example pressure transducer 200 includes a first pressure measurement assembly 202, a second pressure measurement assembly 250, and a pressure housing 204. The pressure transducer 200 receives a fluid via a fluid input line 208 (e.g., the fluid input line 106 of FIG. 1), measures the absolute pressure of the received fluid, and outputs one or more signals representative of the measured pressure.

With reference to FIG. 2, the first pressure measurement assembly 202 defines a measurement cavity 222 in combination with the pressure housing 204. The pressure housing 204 is attached to the fluid input line 208 and to the first pressure measurement assembly 202 to define the measurement cavity 222. The example pressure housing 204 is secured and sealed to both the fluid input line 208 and to the first pressure measurement assembly 202. The first pressure measurement assembly 202 may also be referred to as a "first sensor core," in that the first pressure measurement assembly 202 performs first measurements which are converted to first output signals.

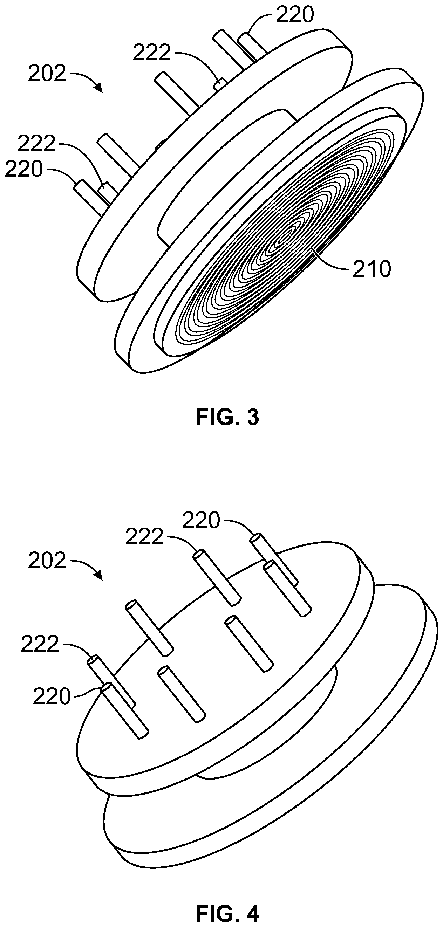

In the illustrated example, the first pressure measurement assembly 202 includes a microelectromechanical pressure sensor 206 coupled to a diaphragm 210. In some examples, the microelectromechanical pressure sensor 206 is a trench etched resonant pressure sensor or other silicon micro-machined in-plane resonating structure, in which the microelectromechanical pressure sensor 206 outputs an output signal having a resonant frequency based on the pressure applied to the diaphragm 210. An example trench etched resonant pressure sensor that may be used to implement the microelectromechanical pressure sensor 206 is described in "Advances in Core Fundamental Sensor Technologies Enabling Improvements in the Metrological Transfer Standards of Pressure Measurement," Moisoi, et al., Metrologist - NCSLI Worldwide News, Vol. 15, No. 2, pp. 46-55 (2002) ("Moisoi"). The entirety of Moisoi is incorporated herein by reference. FIG. 3 is a perspective view of the example first pressure measurement assembly 202 of FIG. 2. FIG. 4 is another perspective view of the example first pressure measurement assembly 202 of FIG. 2.

The diaphragm 210 is subjected to the pressure in the measurement cavity 222, and transfers the pressure to the microelectromechanical pressure sensor 206 via an incompressible fluid within a sensor cavity 212. The microelectromechanical pressure sensor 206 is positioned at a far end of the sensor cavity 212 from the diaphragm 210, and the incompressible fluid fills the remainder of the sensor cavity 212. In some examples, the incompressible fluid is an incompressible oil, which may further be electrically non-conductive. Additionally or alternatively, the microelectromechanical pressure sensor 206 includes a second diaphragm, such as a silicon diaphragm, to electrically insulate the microelectromechanical pressure sensor 206 from the incompressible fluid while transferring force from the fluid to the resonance components of the microelectromechanical pressure sensor 206.

The diaphragm 210 may have an increased or decreased diameter to further increase or decrease the sensitivity of the first pressure measurement assembly 202.

The microelectromechanical pressure sensor 206 is coupled to measurement circuitry 214 via ports 220, 221 for supply of an input signal and/or providing the output signal. The first pressure measurement assembly 202 may define a thermal oven chamber 216, which is in fluid communication with an ambient pressure. The example microelectromechanical pressure sensor 206 may have an integrated pressure reference which is sealed into the microelectromechanical pressure sensor 206. For example, a silicon diaphragm within the microelectromechanical pressure sensor 206 separates the pressure reference from the sensor cavity 212, and a resonating element of the microelectromechanical pressure sensor 206 resides within the reference pressure cavity of the microelectromechanical pressure sensor 206. The microelectromechanical pressure sensor 206 measures the pressure applied against the diaphragm 210 with respect to the integrated pressure reference. The integrated pressure reference in the microelectromechanical pressure sensor 206 may be established, for example, at the construction of the microelectromechanical pressure sensor 206.

Additional ports may provide heating power to the heaters 218 and/or temperature sensor data from the temperature sensor 232 for the control circuitry 228 to control the heaters 218.

In the example of FIG. 2, the surface of the diaphragm 210 has circular convolutions, which may be concentric with the diaphragm 210, and allow the axial deflection of the diaphragm 210 with minimal change of internal tension to improve linearity of the microelectromechanical pressure sensor 206. Because the pressure on the diaphragm 210 is measured by the microelectromechanical pressure sensor 206 (e.g., by measuring a change in the resonance frequency of a driven circuit), increasing the linear movement of the diaphragm 210 improves the precision of the microelectromechanical pressure sensor 206.

The example microelectromechanical pressure sensor 206 has a reduced sensitivity to contamination on the diaphragm 210 (e.g., particulate from the input line 208), compared to conventional capacitive sensors in which the diaphragm is part of the capacitance electrode and the sensor output is a function of the displacement of the diaphragm. Instead of relying on the sensitivity of the diaphragm 210 to affect a capacitance, the diaphragm 210 transfers the pressure in the measurement cavity 222 to the incompressible fluid within the sensor cavity 212. As such, the example pressure transducer 200 may extend the life of the microelectromechanical pressure sensor 206 in contamination-prone applications, and the microelectromechanical pressure sensor 206 may be packaged into a smaller package than conventional sensors by, for example, eliminating a guard volume that reduces contamination on the diaphragm.

To further extend the operational range of measurement beyond the range of the microelectromechanical pressure sensor 206, the example pressure transducer 200 includes the second pressure measurement assembly 250, which is configured to measure the pressure in the measurement cavity 222 using a different sensor configuration. In the example of FIG. 2, the second pressure measurement assembly 250 is a capacitance diaphragm gauge, in which a flexible measurement diaphragm 252 is coupled to a measurement electrode 254. As the pressure at the fluid input line 208 changes relative to a reference pressure (e.g., a vacuum pressure), the measurement diaphragm 252 moves or flexes, changing the capacitance at the measurement electrode 254 in an amount that corresponds to the pressure at the fluid input line 208 and/or in the measurement cavity 222. The capacitance signal is output from the second pressure measurement assembly 250 via one or more signal ports 270.

In the example of FIG. 2, the second pressure measurement assembly 250 further includes a reference electrode 256, which also measures the capacitance as the measurement diaphragm 252 moves in response to the pressure. The electrodes 254, 256 are metalized to form two capacitances with the flexible measurement diaphragm 252. The signals generated by both electrodes 254, 256 change with the pressure but change at different rates. The signals from the reference electrode 256 are output via the signal ports 270, and may be used to measure and offset common mode error (e.g., temperature induced error).

The example second pressure measurement assembly 250 has a sensor housing 258, which contains the reference pressure for the second pressure measurement assembly 250. The sensor housing 258 includes a first section 260 and a second section 262. The first section 260 supports the electrodes 254, 256, and secures the measurement diaphragm 252 in cooperation with a third section 264. For example, the measurement diaphragm 252 may be secured between the first section 260 and the third section 264 evenly around a circumference of the diaphragm 252.

The measurement diaphragm 252 separates the measurement cavity 222 from a second cavity 272 within the pressure housing 204, in which the electrodes 254, 256 are positioned. While the example first pressure measurement assembly 202 is illustrated in FIG. 2 as positioned in the measurement cavity 222, in other examples the first pressure measurement assembly 202 may be positioned at least partially in the second cavity 272.

The pressure transducer 200 may include a plasma shield 268 or other guard positioned between the fluid input line 208 and the measurement diaphragm 252. The plasma shield 268 includes one or more apertures to allow the pressure of the input fluid to be applied to the measurement diaphragm 252, but includes one or more surfaces to block contaminants, thereby reducing accumulation of contaminants on the measurement diaphragm 252.

The second section 262 is secured to an end of the first section 260 to enclose the second pressure measurement assembly 250. The signal ports 270 extend through the second section 262, and are hermetically sealed against the second section 262 to retain the reference pressure within the second pressure measurement assembly 250. The signal ports 270 transmit one or more measurement signals (e.g., signals representative of the measured pressure) and zero or more reference signals (e.g., signals representative of a measured reference signal, such as to reduce or eliminate common mode errors present in the one or more measurement signals). The measurement circuitry 214 is coupled to the signal ports 270 to receive the measurement signals and/or reference signals, and processes the measurement signals and/or reference signals to obtain a pressure measurement by the second pressure measurement assembly 250.

The first pressure measurement assembly 202, the second pressure measurement assembly 250, and/or the pressure housing 204 are at least partially surrounded by one or more outer housings 266. The outer housings 266 may provide thermal insulation and/or physical protection to the first pressure measurement assembly 202, the second pressure measurement assembly 250.

The pressure transducer 200 further includes one or more heaters 218 to increase the temperature of the first pressure measurement assembly 202 and/or of the second pressure measurement assembly 250 (e.g., to reduce effects caused by thermal gradients between the microelectromechanical pressure sensor 206 and the process fluid(s)). The example heater 218 may be positioned around an outside of the outer housings 266, and/or within the outer housings 266 and around the outside of the pressure housing 204, the first pressure measurement assembly 202, and/or the second pressure measurement assembly 250. In some examples, the heater(s) 218 are controlled to heat the first pressure measurement assembly 202 and/or the second pressure measurement assembly 250 to a setpoint temperature which, in some cases, is at least the expected process temperature of the fluid received via the fluid input line 208. In some examples, one or more heat spreaders are positioned in contact between the heater(s) 218 and the outer housings 266 and/or between the heater(s) 218 and the pressure housing 204, the first pressure measurement assembly 202, and/or the second pressure measurement assembly 250, to more effectively distribute heat over a larger area and reduce thermal gradients. The outer housings 266 and/or the pressure housing 204 may be constructed using a thermally conductive material to reduce temperature gradients within the outer housings 266 and/or the pressure housing 204.

The heaters 218 may improve the measurement precision by the first pressure measurement assembly 202, and/or the second pressure measurement assembly 250, and/or the stability of measurement over the lifetime of the first pressure measurement assembly 202, and/or the second pressure measurement assembly 250, over a wide range of input pressures. The heater(s) 218 may further protect against longer-term error due to process-induced shift. While two example heaters 218 are illustrated as heating two different zones in FIG. 2, the pressure transducer 200 may include more or fewer heaters 218 and/or more or fewer heating zones.

The pressure transducer 200 further includes control circuitry 228, which receives measurements from the measurement circuitry 214, controls a heater power supply 230 to provide power to the heater 218, and receives a temperature feedback signal from the heater 218 and/or a temperature sensor 232 on the pressure housing 204.

The control circuitry 228 may be implemented using at least one controller or processor that controls the operations of the pressure transducer 200. The control circuitry 228 receives and processes multiple inputs. The control circuitry 228 may include one or more microprocessors, such as one or more "general-purpose" microprocessors, one or more special-purpose microprocessors and/or ASICS, and/or any other type of processing device. For example, the control circuitry 228 may include one or more digital signal processors (DSPs). The control circuitry 228 may further include memory devices and/or data storage devices.

The example measurement circuitry 214 is connected to output ports 220 and signal ports 270 to receive the measurement signal(s), and/or to input ports 222 to provide an input or drive signal to drive a resonance of the microelectromechanical pressure sensor 206. For example, the measurement circuitry 214 may apply a drive signal to the microelectromechanical pressure sensor 206 via the input ports 222, measure a frequency of a resulting signal output by the microelectromechanical pressure sensor 206 via the output ports 220 and/or by the measurement electrode 254 via the signal ports 270, and determine a measured pressure based on the received measurement signal(s). For example, the measurement circuitry 214 may be calibrated after construction for a set of frequencies and pressures.

In some examples, the first pressure measurement assembly (e.g., the microelectromechanical pressure sensor 206) is configured to output pressure measurement signals having less than a threshold error for fluids having pressures at least from 1 Torr to 100 Torr (e.g., a pressure range which includes at least 1 Torr to 100 Torr, and may include pressures below 1 Torr and/or pressures above 100 Torr). In some examples, the microelectromechanical pressure sensor 206 is configured to output pressure measurement signals having less than a threshold error for fluids having pressures at least from 10 Torr to 1000 Torr. In some examples, the microelectromechanical pressure sensor 206 is configured to output pressure measurement signals having less than a threshold error for fluids having pressures at least from 1 Torr to 1000 Torr. An example threshold error is 0.1500% of the output signal (reading). In other examples, the pressure transducer 200 may be configured to use other pressure ranges as the operational range, which may include 2-decade ranges or 3-decade ranges (on the Torr scale) and/or larger operational ranges, while maintaining less than the threshold error over the operational range.

In some examples, the second pressure measurement assembly 250 (e.g., the capacitance diaphragm gauge) is configured to output pressure measurement signals having less than a threshold error for fluids having pressures at least from 0.01 Torr to 1 Torr (e.g., a pressure range which includes at least 0.01 Torr to 1 Torr, and may include pressures below 0.01 Torr and/or pressures above 1 Torr). In some examples, the second pressure measurement assembly 250 is configured to output pressure measurement signals having less than a threshold error for fluids having pressures at least from 0.1 Torr to 10 Torr. In some examples, the second pressure measurement assembly 250 is configured to output pressure measurement signals having less than a threshold error for fluids having pressures at least from 0.01 Torr to 10 Torr. Example threshold errors include 0.1500% and 0.2500%, and may be a different threshold error than the threshold error for the first pressure measurement assembly 202.

In combination, the first and second pressure measurement assemblies 202, 250 provide the pressure transducer with a large operational range of pressures that can be measured with a low error and high stability. For example, in combination, the first and second pressure measurement assemblies 202, 250 may be configured to output pressure measurement signals having less than a threshold error for fluids having pressures at least from 0.01 Torr to 100 Torr, in which the measurement signals from each of the first and second pressure measurement assemblies 202, 250 are used for different sub-ranges of the overall range, and the sub-ranges may partially overlap. In some examples, the first and second pressure measurement assemblies 202, 250 are configured to output, in combination, pressure measurement signals having less than the threshold error for fluids having pressures at least from 0.1 Torr to 1000 Torr. In some examples, the first and second pressure measurement assemblies 202, 250 are configured to output, in combination, pressure measurement signals having less than a threshold error for fluids having pressures at least from 0.01 Torr to 1000 Torr. In some examples, sub-ranges of the total output pressure range have a lower error than other sub-ranges of the total output pressure range.

The control circuitry 228 determines which of the multiple measurement signals to use as a measured output signal. In the example of FIG. 2, the control circuitry 228 determines the pressure of the input fluid based on the measurement signal from the first pressure measurement assembly 202 (e.g., the microelectromechanical pressure sensor 206) when the pressure is within a first range, and determines the pressure of the input fluid based on the measurement signal from the second pressure measurement assembly 250 (e.g., the capacitance diaphragm gauge) when the pressure is within a second range. In some examples, the first range and the second range are selected based on the respective measurement accuracies of the first and second pressure measurement assemblies 202, 250. For example, the control circuitry 228 may determine the measurement based on the output signal from the first pressure measurement assembly 202 for pressure ranges in which the first pressure measurement assembly 202 provides less than a first threshold measurement error, and determine the measurement based on the output signal from the second pressure measurement assembly 250 for pressure ranges in which the second pressure measurement assembly 250 provides less than a second threshold measurement error. The first and second threshold measurement errors may be the same or different. The first range and the second range of FIG. 2 partially overlap, such that the control circuitry 228 may select from either of the first or second pressure measurement assemblies 250 within the overlapping portions of the pressure ranges.

In some examples, the control circuitry 228 uses the output signal of the first pressure measurement assembly 202 to calibrate the output of the second pressure measurement assembly 250 when the first pressure measurement assembly 202 is subject to lower error than the second pressure measurement assembly 250. For example, when the control circuitry 228 detects that the input pressure is within a predetermined overlapping range, the control circuitry 228 may perform a calibration procedure to calibrate the output signals of the second pressure measurement assembly 250 using the output signals of the first pressure measurement assembly 202. Additionally or alternatively, the control circuitry 228 may use the output signal of the second pressure measurement assembly 250 to calibrate the output of the first pressure measurement assembly 202 when the input fluid pressure is within a portion of the overlapping range in which the second pressure measurement assembly 250 is subject to lower error than the first pressure measurement assembly 202

The example pressure transducer 200 may further include communications circuitry 234 to communicate the measurements to an external computing or control device (e.g., the controller 116 of FIG. 1). For example, the communications circuitry 234 may include any wired and/or wireless communications circuitry. In some examples, the communications circuitry 234 performs digital communications to transmit digital measurement values output by the measurement circuitry 214. By using digital communications, such as EtherCAT, precision measurements made using the pressure transducer 200 are preserved during the communications. The communications circuitry 234 may further receive command signals, which are provided to the control circuitry 228. Example command signals include configuration information, such as a target heating temperature, a temperature reporting interval, and/or any other desired configuration information.

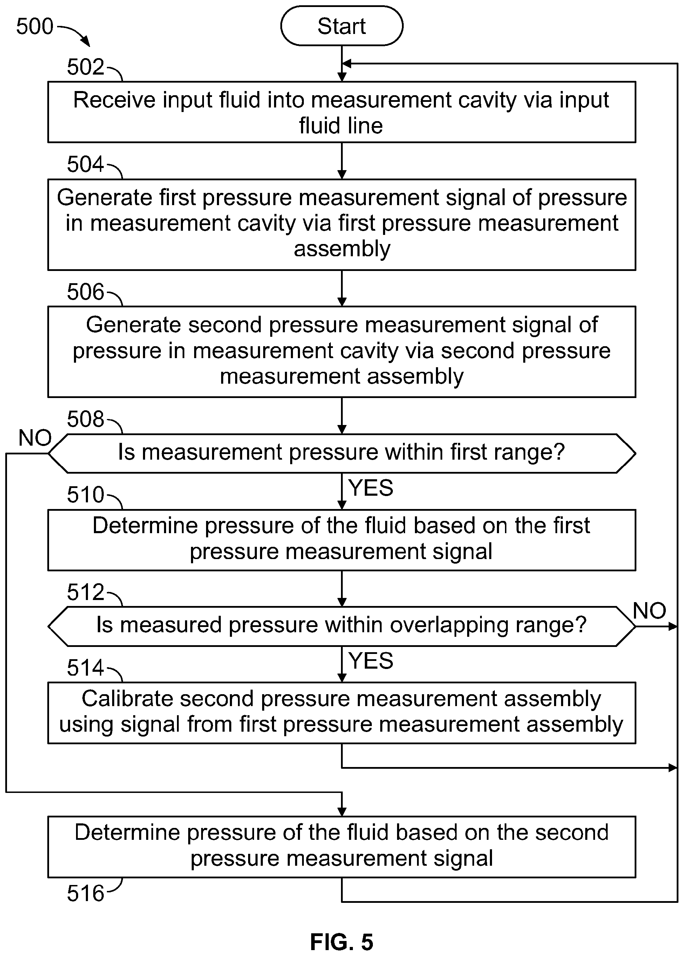

FIG. 5 is a flowchart representative of example machine readable instructions 500 which may be executed by the pressure transducer 200 of FIG. 2 to determine a pressure of a fluid.

At block 502, the pressure transducer 200 receives an input fluid into the measurement cavity 222 via the fluid input line 208. For example, the fluid input line 208 may be coupled to the process chamber 104 of FIG. 1 to measure a pressure of the process fluid performed in the process chamber 104.

At block 504, the first pressure measurement assembly 202 generates a first pressure measurement signal of the pressure in the measurement cavity 222. For example, the microelectromechanical pressure sensor 206 outputs a signal (e.g., via the output ports 220) having a resonance frequency based on the pressure applied on the diaphragm 210. The first pressure measurement assembly 202 outputs the first pressure measurement signal to the measurement circuitry 214.

At block 506, the second pressure measurement assembly 250 generates a second pressure measurement signal of the pressure in the measurement cavity 222. For example, the electrodes 254, 256 outputs measurement and reference signals (e.g., via the signal ports 270), which may be processed by the measurement circuitry 214 to remove common mode error from the measurement signal. The second pressure measurement assembly 250 outputs the second pressure measurement signal to the measurement circuitry 214.

At block 508, the control circuitry 228 determines whether the measured pressure (e.g., the first and/or second pressure measurement signals) is within a first pressure range. For example, the first pressure range may be a predetermined pressure range in which the first pressure measurement signal has less than a threshold error. If the measured pressure is within the first range (block 508), at block 510 the control circuitry 228 determines the pressure of the fluid based on the first pressure measurement signal.

At block 512, the control circuitry 228 determines whether the measured pressure (e.g., the first and/or second pressure measurement signals) is within an overlapping range between the first pressure range and a second pressure range (e.g., a predetermined pressure range in which the second pressure measurement signal has less than a threshold error). If the measured pressure is within the overlapping range (block 512), at block 514 the control circuitry 228 calibrates the second pressure measurement assembly 250 using the measurement signal from the first pressure measurement assembly 202. For example, the control circuitry 228 may adjust processing variables, taught points, and/or other calibration factors for the measurement circuitry 214 to process the output signals from the second pressure measurement assembly 250 to align with or otherwise based on a corresponding measurement signal from the first pressure measurement assembly 202. In some examples, the control circuitry 228 limits calibrations to less than a threshold frequency to limit power consumption.

If the measured pressure is not within the first range (block 508), at block 516 the control circuitry 228 determines the pressure of the fluid in the measurement cavity 222 based on the second pressure measurement signal from the second pressure measurement assembly 250.

After calibrating the second pressure measurement assembly 250 (block 514), if the measured pressure is not within the overlapping range (block 512), or after determines the pressure of the fluid in the measurement cavity 222 based on the second pressure measurement signal (block 516), control returns to block 502 to continue monitoring the pressure.

The present devices and/or methods may be realized in hardware, software, or a combination of hardware and software. The present methods and/or systems may be realized in a centralized fashion in at least one computing system, processors, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power source with a program or other code that, when being loaded and executed, controls the welding power source such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made, and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.

## Claims

1. A pressure transducer, comprising:
a pressure housing comprising a first cavity;
a fluid input line configured to provide a fluid to the first cavity;
a first pressure measurement assembly having a first type and configured to output a first measurement signal based on a pressure of the fluid in the first cavity;
a second pressure measurement assembly having a second type and configured to output a second measurement signal based on the pressure of the fluid in the first cavity; and
a controller configured to determine the pressure of the fluid in the first cavity based on the first measurement signal when the pressure is within a first range and determine the pressure of the fluid in the first cavity based on the second measurement signal when the pressure is within a second range.

2. The pressure transducer as defined in claim 1, wherein the first pressure measurement assembly comprises a microelectromechanical pressure sensor.

3. The pressure transducer as defined in claim 2, wherein the microelectromechanical pressure sensor comprises a trench etched resonant pressure sensor.

4. The pressure transducer as defined in claim 1, wherein the second pressure sensor comprises a capacitance diaphragm gauge.

5. The pressure transducer as defined in claim 4, wherein the pressure housing comprises a second cavity separated from the first cavity by a measurement diaphragm, and the second pressure measurement assembly is positioned within the second cavity.

6. The pressure transducer as defined in claim 5, further comprising a heater configured to heat at least the first and second cavities based on a target temperature.

7. The pressure transducer as defined in claim 5, wherein the first pressure measurement assembly is positioned at least partially within the first cavity or at least partially within the second cavity.

8. The pressure transducer as defined in claim 1, wherein the first range and the second range cover at least 0.01 Torr to 100 Torr.

9. The pressure transducer as defined in claim 1, wherein the first range and the second range cover at least 0.1 Torr to 1000 Torr.

10. The pressure transducer as defined in claim 1, wherein the first range and the second range cover at least 0.01 Torr to 1000 Torr.

11. The pressure transducer as defined in claim 1, wherein the controller is configured to calibrate one of the first pressure measurement assembly or the second pressure measurement assembly based on an output of the other of the first pressure measurement assembly or the second pressure measurement assembly when the pressure of the fluid is within a predetermined range.

12. The pressure transducer as defined in claim 11, wherein the first range partially overlaps with the second range, and the predetermined range is at least partially within the overlapping portions of the first range and the second range.

13. The pressure transducer as defined in claim 1, wherein the first range partially overlaps with the second range.
